# EUROPÄISCHE PATENTSCHRIFT

(11) **EP 1 222 852 B1**
(45) Veröffentlichungstag und Bekanntmachung des Hinweises auf die Patenterteilung: **02.05.2007**
(21) Anmeldenummer: 02000018.8
(22) Anmeldetag: 03.01.2002
(51) Int. Cl.: A01G 1/08

(54) **Begrenzungselement für eine Rasenkantenbegrenzung sowie Rasenkantenbegrenzung mit wenigstens einem solchen Begrenzungselement**
Boundary element for lawn edging and lawn edging with at least one such element
Elément de limitation pour bordure de pelouse et bordure de pelouse comprenant au moins un tel élément

(30) Priorität: 13.01.2001 DE 10101322
(43) Veröffentlichungstag der Anmeldung: 17.07.2002
(73) Patentinhaber: Baumann, Georg, 94081 Fürstenzell-Jäger (DE)
(72) Erfinder: Baumann, Georg, 94081 Fürstenzell-Jäger (DE)
(74) Vertreter: Graf, Helmut

(56) Entgegenhaltungen:
- GB-A- 399 250
- US-A- 3 378 949
- US-A- 3 841 022
- US-A- 6 012 254
- US-A- 6 108 969

## Beschreibung

Die Erfindung bezieht sich auf ein Begrenzungselement für eine Rasenkantenbegrenzung gemäß Oberbegriff Patentanspruch 1 sowie auf eine Rasenkantenbegrenzung gemäß Oberbegriff Patentanspruch 7.

Bekannt ist ein Rasenkantensystem (WO99/07204), welches im wesentlichen aus aneinander anschließenden und formschlüssig miteinander verbundenen streifenförmigen Platten besteht, die jeweils mittels Erdanker aufrechtstehend auf einem Untergrund befestigbar sind. Die Platten sind mit einem Profil versehen, welches an dem oberen und unteren Plattenlängsrand jeweils einen U-förmigen Rand an einer Plattenseite sowie dazwischenliegend mehrere in Plattenlängsrichtung sich erstreckende leistenartige Vorsprünge und Vertiefungen bildet. Im Bereich der Längsränder sind an der anderen Seite der Platten leistenartige Vorsprünge angeformt. Mit diesen kann jede Platte in die von den U-förmigen Rändern gebildeten Hinterschneidungen einer anschließenden Platte formschlüssig eingeführt werden.

Die Platten sind aus einem Material gefertigt, beispielsweise aus Aluminium oder Kunststoff, welches eine derartige Profilierung zulässt. Für ein Einbringen in den Untergrund oder Boden ohne Öffnen dieses Untergrundes durch Einschlagen sind die Platten bzw. Begrenzungselemente dieses bekannten Systems nicht geeignet.

Bekannt ist weiterhin eine Rasenkantenbegrenzung (US 4 281 473), die von wenigstens einem plattenförmigen Begrenzungselement gebildet ist, welches an seinem oberen, in Längsrichtung des Begrenzungselementes verlaufenden Rand mit einem rohrartigen Profilabschnitt versehen ist und daran anschließend mit einem gewellten Plattenabschnitt, dessen Wellungen senkrecht zu dem oberen Rand verlaufen. An diesem gewellten Abschnitt schließt sich dann zum unteren Rand des Begrenzungselementes hin ein ebener oder im wesentlichen ebener Plattenabschnitt an. Am Übergang zwischen dem gewellten und dem ebenen Plattenabschnitt sind widerhakenartig wirkende und über die jeweilige Oberflächenseite flügelartig wegstehende, sich in Längsrichtung des Begrenzungselementes erstreckende Wandabschnitte angeformt. Das bekannte Begrenzungselement ist schon von seiner Struktur her sehr kompliziert und erfordert daher eine aufwendige Herstellung.

Bekannt ist weiterhin ein ringförmiges Begrenzungselement (US 5 465 526), welches aus einem Flachmaterial zu dem Ring gebogen ist und einen oberen U-förmig umgebogenen Rand aufweist. Eine Profilierung besitzt dieses bekannte Rasenbegrenzungselement nicht.

Bekannt sind weiterhin Rasenbegrenzungselemente in Form von flachen, unprofilierten Platten oder Blechen (GB 1 476 723), die lediglich an ihren Rändern abgewinkelt oder mit U-förmig gebogenen Randabschnitten versehen sind.

Bekannt ist weiterhin eine Rasenkantenbegrenzung (US 6,108,969), die von mehreren, aneinander anschließenden Begrenzungselementen gebildet ist. Diese sind als ebene Platten aus Stahl mit einem hülsenartig eingerollten oberen Profilrand ausgeführt. Die Verbindung zwischen aneinander anschließenden Begrenzungselementen erfolgt durch Zapfen, die in den hülsenartig eingerollten Profilrändern aufgenommen sind und die aneinander anschließende Begrenzungselemente im Anschlussbereich der oberen Profilränder überlappen.

Bekannt ist weiterhin eine Rasenkantenbegrenzung (US 3,841,022), die von mehreren aneinander anschließenden und einander überlappenden Begrenzungselementen gebildet ist, die jeweils an ihren oberen und unteren Plattenrändern zu hülsenartigen Profilrändern eingerollt sind, und zwar mit unterschiedlichem Durchmesser, sodass die einzelnen Begrenzungselemente jeweils abwechselnd gewendet, einander überlappend und an den Profilrändern ineinandergreifend zu einer Rasenkantenbegrenzung verbunden werden können. Ein Einbringen der Begrenzungselemente in den Boden oder Untergrund durch Eintreiben ohne Öffnen des Untergrundes ist bei dieser Ausführung allerdings nicht möglich.

Dokument US-A-3 378 949 offenbart ein Begrenzungselement gemäß dem Oberbegriff des Anspruchs 1.

Aufgabe der Erfindung ist es, ein Begrenzungselement aufzuzeigen, mit dem in besonders einfacher Weise eine Rasenkantenbegrenzung realisiert werden kann, und zwar in der Weise, dass die erzeugte Rasenkantenbegrenzung stabil und belastbar ist, so dass auch das Überfahren mit Mähmaschinen mit hohem Gewicht ohne Beschädigung der Rasenkantenbegrenzung und ohne die Gefahr eines Absinkens dieser Begrenzung in den Untergrund möglich ist.

Zur Lösung dieser Aufgabe sind ein Begrenzungselement entsprechend dem Patentanspruch 1 und eine Rasenkantenbegrenzung entsprechend dem Patentanspruch 7 ausgebildet.

Die Besonderheit des erfindungsgemäßen Begrenzungselementes besteht generell darin, dass es aus einem nicht rostenden Stahlblech aus Chromstahl durch Profilieren hergestellt ist, und mit dem oberen, ein U-Profil bildenden, durch Umbiegen des Stahlbleches erzeugten Rand sowie mit der parallel zu diesem oberen Rand verlaufenden Wellung.

Das verwendete Material ist hart genug, so daß trotz der quer zur Einbringrichtung verlaufenden Wellung ein Einbringen des jeweiligen Begrenzungselementes in den Boden ohne Öffnen des Bodens durch Einschlagen möglich ist. Durch die parallel zum oberen Rand und damit quer zur Eintreibrichtung verlaufende Wellung erfolgt eine Verdichtung des Bodens beim Eintreiben. Hierdurch wird eine zuverlässige Verankerung erreicht und insbesondere auch einem unerwünschten Absinken der Rasenkatenbegrenzung bei Belastung, beispielsweise beim Überfahren mit Mähmaschinen mit hohem Gewicht usw. entgegengewirkt.

Durch den oberen, umgebogenen Rand weist das Begrenzungselement nach dem Einbringen in den Boden bei hoher Festigkeit auch ein ansprechendes optisches Erscheinigungsbild auf und die Gefahr einer Verletzung durch scharfe Kanten ist vermieden.

Die erfindungsgemäße Rasenkatenbegrenzung, die im einfachsten Fall von einem einzigen Begrenzungselement gebildet ist, kann in verschiedensten Formen, beispielsweise rund, eckig, oval usw. hergestellt werden.

Bei einer möglichen Ausführungsform der Erfindung besteht die Rasenkantenbegrenzung aus mehreren aneinander anschließenden Begrenzungselementen, so daß u.a. Länge und Verlauf der Rasenkantenbegrenzung durch eine entsprechende Anzahl von Begrenzungselementen dem jeweiligen örtlichen Gegebenheiten bzw. Anforderungen optimal angepaßt werden können. Die aneinander anschließenden, die Rasenkantenbegrenzung bildenden Begrenzungselemente sind vorzugsweise durch Verbindungselemente miteinander verbunden. Derartige Verbindungselemente sind beispielsweise Verschraubungen, Steckverbindungen, Klammersysteme usw.

Bei einer anderen möglichen Ausführungsform der Erfindung ist die Rasenkantenbegrenzung ringförmig ausgebildet und besteht aus wenigstens einem beispielsweise zu einem offenen Ring gebogenen Begrenzungselement, welches dann im Verwendungsfall beispielsweise durch eine Verbindung zu dem geschlossenen Ring verbunden werden kann.

Bei einer weiteren Ausführung des erfindungsgemäßen Begrenzungselementes weist die das Begrenzungselement bildende Platte aus dem korrosionsbeständigen Stahl Öffnungen für Anker auf, die mit ihrer Längserstreckung quer bzw. senkrecht zur Plattenebene im Untergrund verlaufen und dadurch ein Absinken des Begrenzungselementes bzw. der Rasenkantenbegrenzung verhindern.

Bei einer weiteren, möglichen Ausführungsform der Erfindung sind die die Rasenkantenbegrenzung bildenden Begrenzungselemente bzw. deren Platten an ihren Schmal- oder Querseiten mit jeweils einer Abwinklung versehen und im Bereich dieser Abwinklungen durch gabelartige Verbindungselemente miteinander verbunden.

Die erfindungsgemäße Rasenkantenbegrenzung dient zunächst primär zur Begrenzung der Kante eines Rasens gegenüber einem benachbarten Bereich. Entlang dieser Kante ist ein bequemes Zuschneiden des Rasens, insbesondere auch mit einer Mähmaschine möglich. Die erfindungsgemäße Rasenkantenbegrenzung dient aber auch dem Schutz gegen Wurzelverbiß, beispielsweise durch Wühlmäuse und/oder erhinderung eines Ausschwemmens von Dünger und damit einer Ertragssteigerung beispielsweise bei Nutzpflanzen bei reduziertem Düngerverbrauch und geringerer Umweltbelastung.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und im Querschnitt ein Rasenkantenbegrenzungselement gemäß der Erfindung;
- Fig. 2: das Begrenzungselement in Seitenansicht;
- Fig. 3: eine Draufsicht auf zwei aneinander anschließende geradlinige Begrenzungselemente der Figuren 1 und 2;
- Fig. 4 - 6: in Darstellungen ähnlich den Figuren 1 - 3 eine weitere mögliche Ausführungsform eines Begrenzungselementes gemäß der Erfindung;
- Fig. 7: eine Draufsicht auf ein als Ring ausgebildetes Begrenzungselement gemäß der Erfindung;
- Fig. 8 und 9: in Seitenansicht und in Draufsicht eine weitere Ausführung der erfindungsgemäßen Rasenkantenbegrenzung;
- Fig. 10 und 11: in vereinfachter Darstellung und in Seitenansicht zwei Begrenzungselemente vor und nach dem Zusammenfügen;
- Fig. 12: in vereinfachter Darstellung und im Schnitt die Verbindung zwischen den Begrenzungselementen der Figuren 10 und 11;
- Fig. 13: in vereinfachter perspektivischer Darstellung ein Begrenzungselement bei einer weiteren möglichen Ausführung der Erfindung;
- Fig. 14: in vereinfachter Teildarstellung und in Draufsicht das Begrenzungselement der Figur 13 bei einer gebogenen Rasenkantenbegrenzung;
- Fig. 15 und 16: in verschiedenen Seitenansicht eine Einschlaghilfe zum manuellen Einschlagen eines Begrenzungselementes gemäß der Erfindung;
- Fig. 17: eine Darstellung ähnlich Figur 15, jedoch bei einem maschinellen Einschlagen eines Begrenzungselementes;
- Fig. 18: in einer Darstellung ähnlich Figur 15 eine weitereAusführung der Einschlaghilfe;
- Fig. 19: verschiedene Einschlaghilfen bei einem gebogenen Begrenzungselement;
- Fig. 20: in vereinfachter Darstellung eine Halterung;
- Fig. 21: in vereinfachter Darstellung und in Seitenansicht zwei aneinander anschließende Begrenzungselemente gemäß der Erfindung;
- Fig. 22: in vereinfachter Darstellung einen Schnitt durch die Begrenzungselemente im Anschlußbereich entsprechend der Schnittlinie I - I der Figur 21;
- Fig. 23: eine Draufsicht auf die aneinander anschließenden Begrenzungselemente.

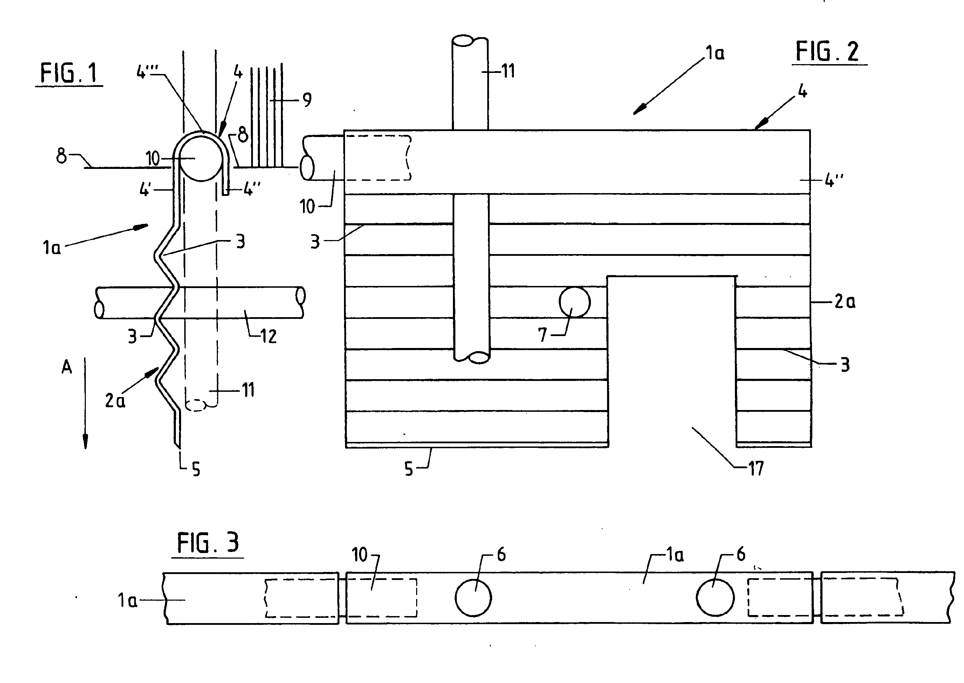

Da in den Figuren 1 - 3 allgemein mit 1a bezeichnete Begrenzungselement ist im wesentlichen als rechteckförmige Platte 2a aus Chromstahl ausgeführt, wobei die Platte 2a profiliert bzw. gewellt ist und die diese Profilierung bildenden Wellen 3 parallel zu den längeren Seiten (Längsseiten) der Platte 2a verlaufen. An einer Längsseite, die bei eingebautem Begrenzungselement 1a auch die Oberseite dieses Begrenzungselementes bildet, ist die Platte 2a in einer umgebogenen Längskante 4 versehen, so daß die Platte dort ein U-Profil bildet, welches zu der in den Figuren unteren Längsseite 5 der Platte 2a hin offen ist und Schenkelabschnitte 4' und 4" sowie einen diese Schenkelabschnitte an der Oberseite der Platte 2a verbindenden Jochabschnitt 4''' aufweist.

In dem Jochabschnitt 4" sind in vorgegebenen Abständen Öffnungen 6 vorgesehen. Weitere Öffnungen 7 befinden sich in der Platte 2 außerhalb des umgebogenen Längsrandes 4.

Im Verwendungsfall wird das jeweilige Begrenzungselement 1a in den Boden 8 eingebracht, beispielsweise eingedrückt oder eingeschlagen, und zwar dort wo eine Begrenzung, beispielsweise eine Rasenkantenbegrenzung gewünscht ist, so daß der in der Figur 1 allgemein mit 9 angedeutete und rechts, d.h. an den freien Schenkel 4" unmittelbar anschließende Rasen nicht in den links von dem Begrenzungselement 1a befindlichen Bereich auswachsen kann.

Zur Bildung der Rasenkantenbegrenzung werden die Begrenzungselemente 1a aneinander anschließend in den Boden 8 eingebracht und im Bereich der umgebogenen Längsränder 4 durch Verbindungselemente 10 miteinander verbunden. Bei der dargestellten Ausführungsform sind die Verbindungselemente 10 Zapfen, die jeweils an einer Schmalseite ein Begrenzungselement 1a beispielsweise durch Einklemmen in dem von der umgebogenen Längskante 4 gebildeten U-Profil und/oder zusätzliches Verschweißen mit einem Ende gehalten sind und mit dem anderen Ende über die Schmalseite des Begrenzungselementes 1a vorstehen, so daß das betreffende zapfenartige Verbindungselement 10 dann mit dem vorstehenden Ende von dem U-Profil der umgebogenen Längskante 4 des benachbarten Begrenzungselementes aufgenommen werden kann und dadurch eine Anschlußverbindung zwischen den aneinander angrenzenden Begrenzungselementen 1a gebildet ist.

Durch die Öffnungen 6 können Stäbe oder Pfosten 11 in den Boden eingedrückt werden, beispielsweise Stäbe oder Pfosten für einen Zaun. Die weiteren an der jeweiligen Platte 2a außerhalb der umgebogenen Längskante 4 vorgesehenen Öffnungen 7 dienen zur Aufnahme von stabförmigen Bodenankern 12, die mit ihrer Längserstreckung dann quer zu der jeweiligen Platte 2 liegen und damit das betreffende Begrenzungselement 1a zuverlässig im Boden verankern und insbesondere auch ein Absinken des jeweiligen Begrenzungselementes 1a bei Belastung (z.B. beim Überfahren mit einer schweren Mähmaschine) verhindern.

Wie die Figur 1 auch zeigt, werden die Begrenzungselemente 1a dabei so in den Boden 8 eingebracht, daß die Profilierung bzw. die Wellen 3 mit ihrer Längserstreckung senkrecht zur Eintreibrichtung (Pfeil A der Figur 1) liegen und nach dem Einbringen im wesentlichen nur die umgebogenen Längskanten 4 dieser Begrenzungselemente über die Bodenoberseite vorstehen und damit sichtbar sind. Durch die umgebogenen Längsseiten besitzen die Begrenzungselemente 1a eine hohe Stabilität und Festigkeit, so daß insbesondere auch beim maschinellen Mähen des Rasens 9 die Begrenzung nicht zerstört wird. Durch die umgebogenen Längskanten 4 der Begrenzungselemente 1a ergibt sich auch ein optisch ansprechendes Erscheinigungsbild für die Begrenzung und es werden scharfe, die Gefahr einer Verletzung bedingende Kanten usw. vermieden.

Die Profilierung bzw. Wellung 3 der Platte 2a parallel zu ihren Längskanten hat u.a. den Vorteil, daß nach dem Einbringen in den Boden 8 durch diese Profilierung eine zusätzliche Verankerung des jeweiligen Begrenzungselementes 1a erreicht ist, insbesondere aber auch ein Absinken der Begrenzung beim Überfahren mit einer schwereren Maschine, beispielsweise mit einer Mähmaschine nicht in den Boden 8 zusätzlich verhindert wird.

Zum Durchführen von im Boden 8 verlegten Anschlüssen von Entwässerungsanlagen sind zumindest einige der für eine Begrenzung verwendeten Begrenzungselemente 1a bzw. 1b bei ihrer Platte mit einer zur unteren Plattenkante in offenen Ausnehmung versehen, wie dies in der Figur 2 mit 17 angedeutet ist.

Wie die Figur 1 auch zeigt, ist der umgebogene Rand 4 so ausgebildet, daß dieser Rand 4 vollständig seitlich von der übrigen profilierten Platte 2a liegt, so daß durch die Öffnungen 6 die Stäbe 11 an der dem umgebogenen Rand 4 zugewandten Seite der profilierten Platte 2a positioniert und in den Boden eingebracht werden können.

Wie vorstehend bereits erwähnt wurde, werden die Begrenzungselemente ohne Öffnen des Bodens in diesen durch Eintreiben eingebracht. Durch die senkrecht bzw. quer zur Eintreibrichtung (Pfeil A) verlaufende Profilierung bzw. Wellung 3 erfolgt beim Eintreiben ferner auch ein Verdichten des Bodens in der Nähe des jeweiligen Begrenzungselementes 1a, so daß dieses dann besonders zuverlässig im Boden verankert ist.

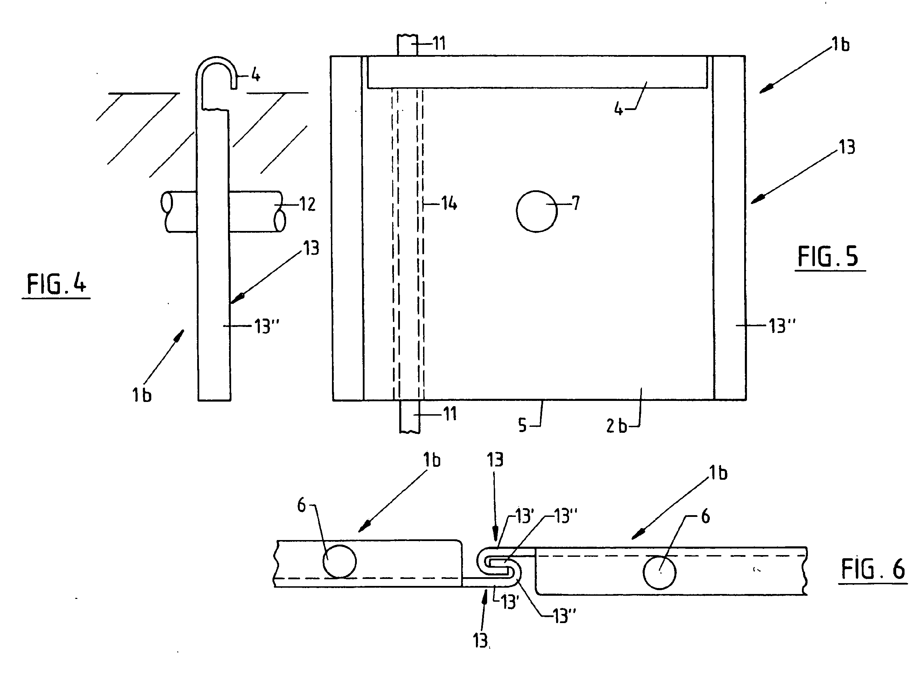

Die Figuren 4 - 6 zeigen als weitere mögliche Ausführungsform ein Begrenzungselement 1b, welches von einer nicht profilierten, d.h. von einer planen oder im wesentlichen planen, rechteckförmigen Platte 2b gebildet ist, die an ihrer im Verwendungsfall oberen Längsseite mit dem umgebogenen Längsrand 4 versehen ist und an den beiden Schmalseiten jeweils mit dem umgebogenen Rand 13, wobei sich der umgebogene Rand 4 sich allerdings abweichend von dem Begrenzungselement 1a nicht über die gesamte Länge der Platte 2b erstreckt. Die umgebogenen Ränder 13, die von den Schenkeln 13' und 13" und dem diese verbindenden Jochabschnitt 13''' gebildet sind, dienen bei dieser Ausführungsform zum Verbinden der aneinander anschließenden Begrenzungselemente 1b. Im umgebogenen Rand 4 sind Öffnungen 6 beispielsweise für die Stäbe 11 und in der Platte 2b Öffnungen 7 für die Anker 12 vorgesehen. Weiterhin können Rohrstücke 14 für die Stäbe 11 an der Platte 2b angeschweißt sein.

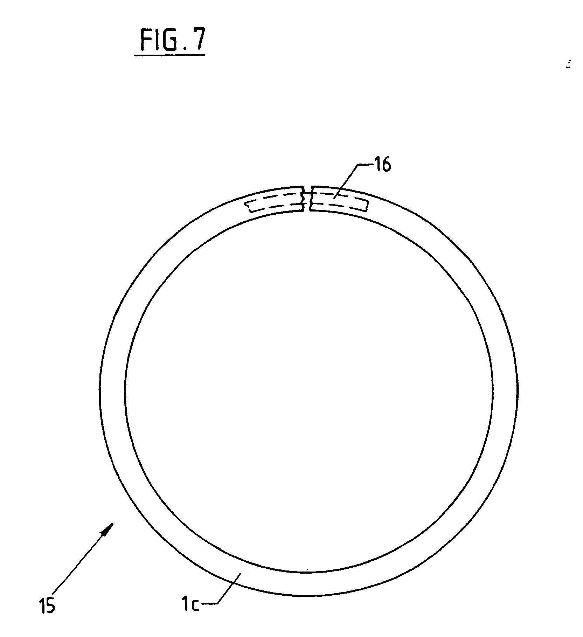

Die Figur 7 zeigt schließlich in sehr vereinfachter Darstellung eine als Ring ausgebildete Rasenkantenbegrenzung 15. Diese Begrenzung besteht aus einem einzigen, ringförmig gebogenen Begrenzungselement 1c, wie es beispielsweise vorstehend im Zusammenhang mit den Figuren 1 - 6 beschrieben wurde und welches als offener Ring geformt ist. Das Begrenzungselement 1c ist beispielsweise für eine Rasenkantenbegrenzung um einen Baum, Busch usw. geeignet. Durch die Ausbildung als offener Ring kann das Begrenzungselement 1c vor dem Einbringen in den Boden 8 um den Stamm eines Baumes gelegt und dann durch ein Verbindungselement, beispielsweise durch ein dem Verbindungselement 10 entsprechendes, allerdings gekrümmtes Verbindungselement 16 geschlossen werden.

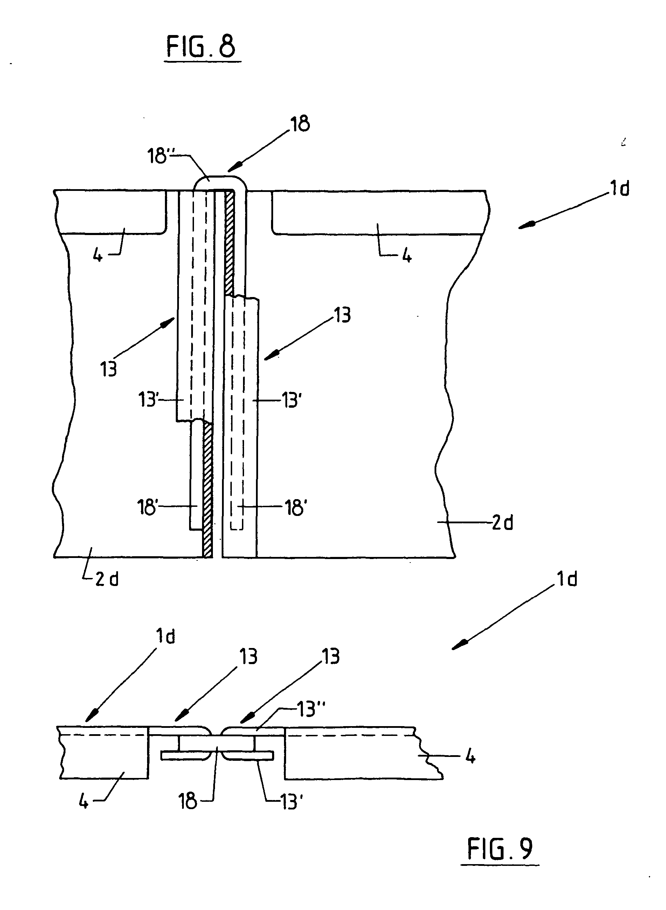

Die Figuren 8 und 9 zeigen als weitere mögliche Ausführungsform eine Abwandlung der Rasenkantenbegrenzung der Figuren 4 - 6. Diese Rasenkantenbegrenzung unterscheidet sich von der Ausführung der der Figuren 4 - 6 dadurch, daß die einzelnen, aneinander anschließenden und die Rasenkantenbegrenzung bildenden Begrenzungselemente 1d jeweils in gleicher Orientierung in den Untergrund bzw. Boden 8 eingebracht und die aneinander anschließenden Begrenzungselemente 1d dann durch gabelartige Verbindungsstücke 18 miteinander verbunden sind, die mit ihren Schenkeln 18' oder Gabelenden jeweils in einem umgebogenen Rand 13 einer Platte 2d aufgenommen sind und mit ihrem die Schenkel 18' verbindenden Jochabschnitt 18" auf dem oberen Rand der aneinander anschließenden Begrenzungselemente 1d aufliegen. Die Ausführung der Figuren 8 und 9 hat gegenüber der Ausführung der Figuren 4 - 6 den Vorteil eines optisch besonders ansprechenden Erscheinigungsbildes. Darüber hinaus sind die den umgebogenen Rand 4 nicht aufweisenden Bereiche der oberen Ränder der Begrenzungselemente 1d durch die Verbindungselemente 18 bzw. deren Jochabschnitte 18" abgedeckt.

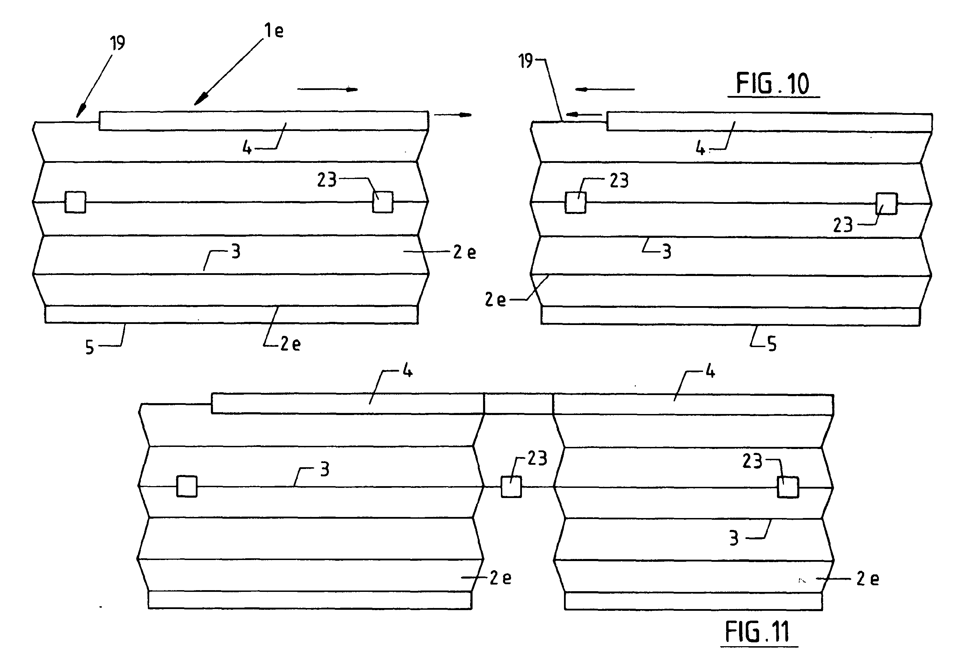

Die Figuren 10 und 11 zeigen in Seitenansicht zwei Begrenzungselemente 1e, die dem Begrenzungselement 1a entsprechen, die sich allerdings von dem Begrenzungselement 1a dadurch unterscheiden, daß der umgebogene Rand 4 bei dem Begrenzungselement 1e an jeweils einer Seite dieses Begrenzungselementes bzw. der Platte 2e über eine vorgegebene Länge ausgeklinkt ist, wie dies mit 19 in den Figuren 10 und 11 bezeichnet ist. Durch diese Ausklinkung 19 ist es möglich, die beiden Begrenzungselemente bzw. deren Platten 2a bei ineinandergreifenden Profilierungen bzw. Wellungen 3 überlappend miteinander zu verbinden, wobei die umgebogenen Ränder 4 der aneinander anschließenden Platten einen nahezu gleichförmigen Randabschluß für die in den Boden eingebrachten Begrenzungselemente 1e bilden. Der geringe Versatz zwischen aneinander anschließenden Rändern 4 im Bereich der Ausklinkung 19 ist auch in Draufsicht optisch nicht oder praktisch nicht sichtbar, und zwar bedingt auch durch die relativ geringe Wandstärke der Platten 2e, die wiederum aus Chromstahl gefertigt sind.

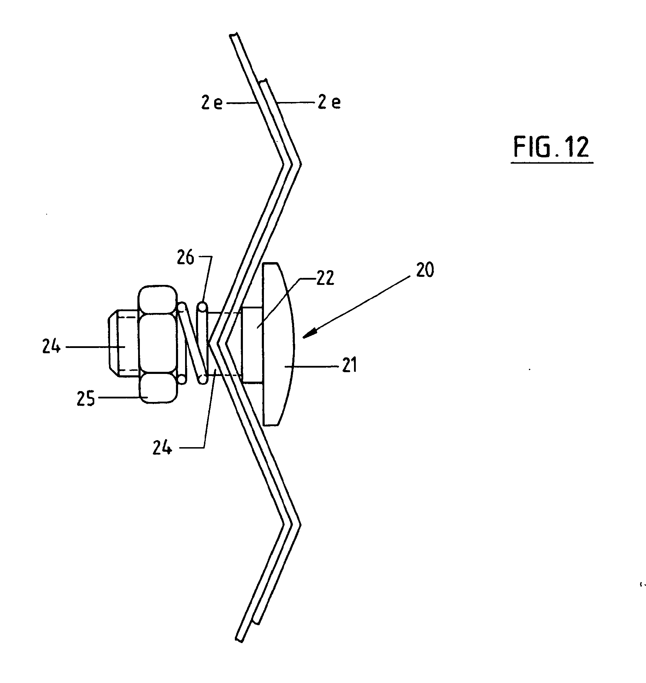

Die Figur 12 zeigt eine Verbindung zwischen zwei Begrenzungselementen 1 e bzw. den Platten 2e. Die Verbindung besteht im wesentlichen aus einer Schraube 20, die mit einem vierkantförmigen, an den Kopf 21 anschließenden Abschnitt 22 verdrehungssicher in eine angepaßte Öffnung 23 der jeweiligen Platte 2e eingreift. Mit dem sich an den Abschnitt 22 anschließenden Gewindeschaft 24 erstreckt sich die Schraube 20 durch die Öffnung 23 des anzuschließenden bzw. zu verbindenden Begrenzungselementes 1e. Auf dem Schraubenschaft 24 ist eine Mutter 25 vorgesehen, an der sich eine den Schraubschaft 24 umschließende Druckfeder 26 mit einem Ende abstützt, die mit ihrem anderen Ende gegen die der Mutter 25 zugewandte Seite der anzuschließenden Platte 2e anliegt, so daß die miteinander zu verbindenden Platten 2e zwischen dem Schraubenkopf 21 und der Druckfeder 26 eingespannt und gegeneinander angepreßt sind, und zwar derart, daß die Platten 2e mit ihren Wellungen 3 ineinandergreifen, sobald die aneinander anschließenden Platten 2e in einer Linie ausgerichtet sind. Die in der Figur 12 dargestellte Verbindung ermöglicht es unter Zusammendrücken der Druckfeder 26 eine Platte 2e gegenüber der anschließenden Platte 2e um die Achse der Schraube 20, d.h. um eine Achse senkrecht zur Ebene der Platten 2e zu verschwenken. Hierdurch ist es möglich, die Begrenzungselemente 1e bzw. deren Platten vor dem Eintreiben in den Boden in der beschriebenen Weise miteinander zu verbinden und erst dann nacheinander in den Boden einzutreiben, wobei dann, wenn zwei Platten 2e beim Eintreiben schließlich in einer Linie angeordnet sind, die Wellungen bzw. Profilierungen dieser Platten einrasten. Grundsätzlich besteht die Möglichkeit, auf die Druckfeder 26 zu verzichten und für das Verschwenken bzw. Einrasten die Eigenelastizität des für die Platten verwendeten Materials zu nutzen.

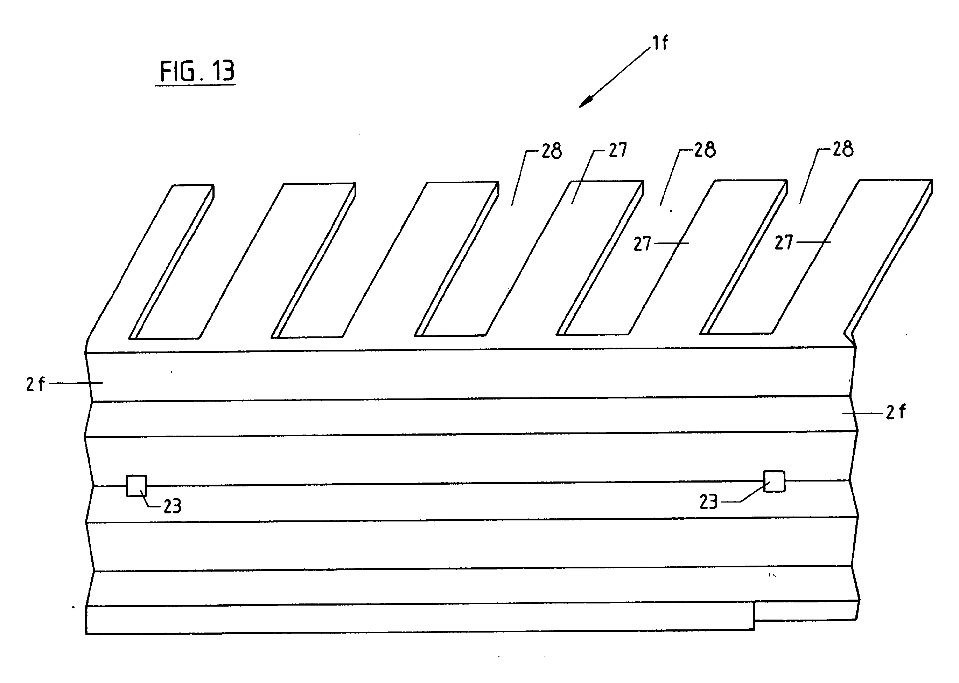

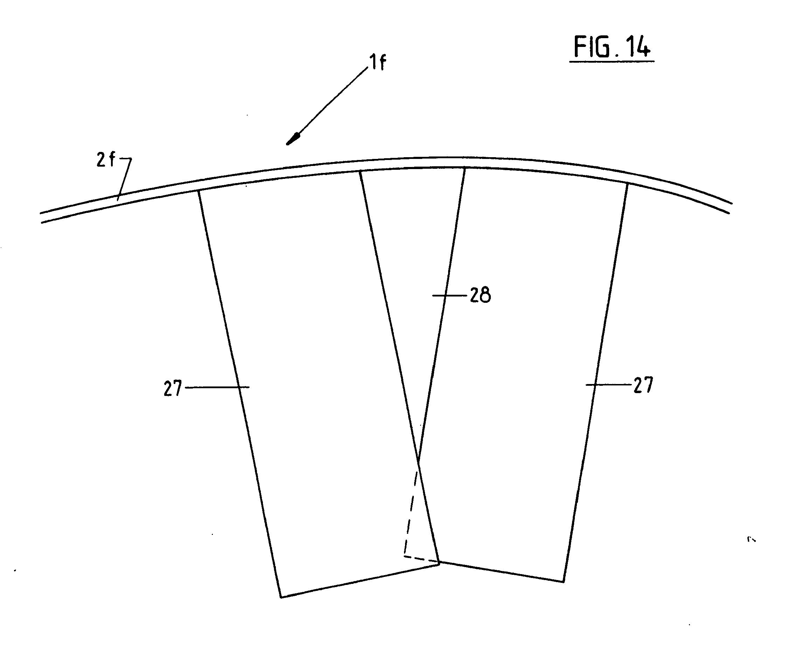

Die Figuren 13 und 14 zeigen als weitere mögliche Ausführungsform ein Begrenzungselement 1f, welches sich von dem Begrenzungselement 1e im wesentlichen dadurch unterscheidet, daß anstelle des oberen umgebogenen Randes 4 die Platte 2f an ihrem oberen Rand eine Vielzahl von Laschen 27 aufweist, die über eine gemeinsame Seite der Platte 2f jeweils rechtwinklig wegstehen und voneinander beabstandet sind. Die Laschen 27 sind dadurch gebildet, daß das Material der Platte 2f mit den Abständen 28 zwischen den Laschen 27 entsprechenden Ausklinkungen versehen ist und dann die Laschen 27 rechtwinklig umgebogen werden. Das Begrenzungselement 1f eignet sich insbesondere für runde Rasenkantenbegrenzungen, d.h. beim Rundbiegen in der Weise, daß die Laschen über die innenliegende Seite der Biegung vorstehen, übergreifen die Laschen 28 einander zumindest an ihren freien Enden, wie dies in der Figur 14 für zwei Laschen 27 angedeutet ist. Hierdurch ergibt sich ein besonders stabiler oberer Abschluß für die gerundete Rasenkantenbegrenzung.

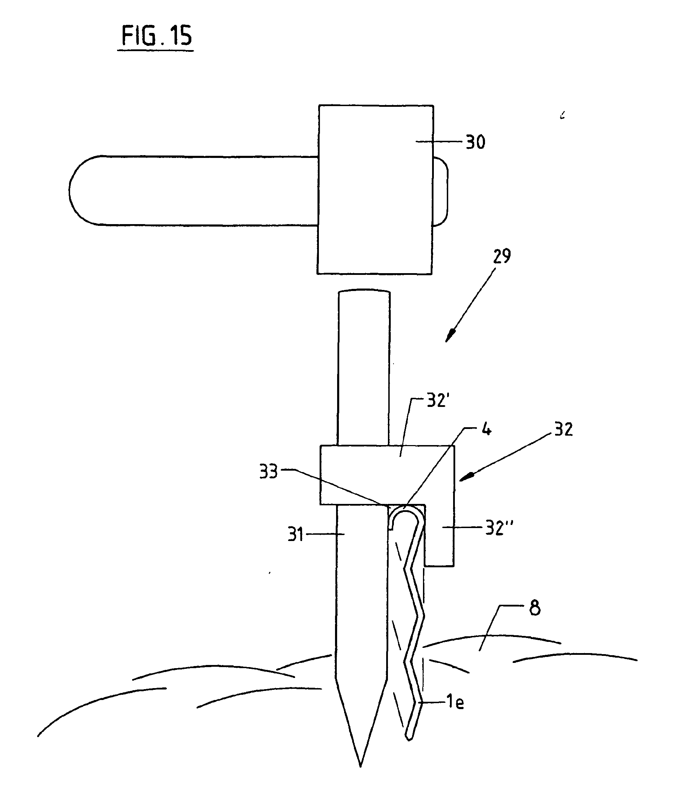

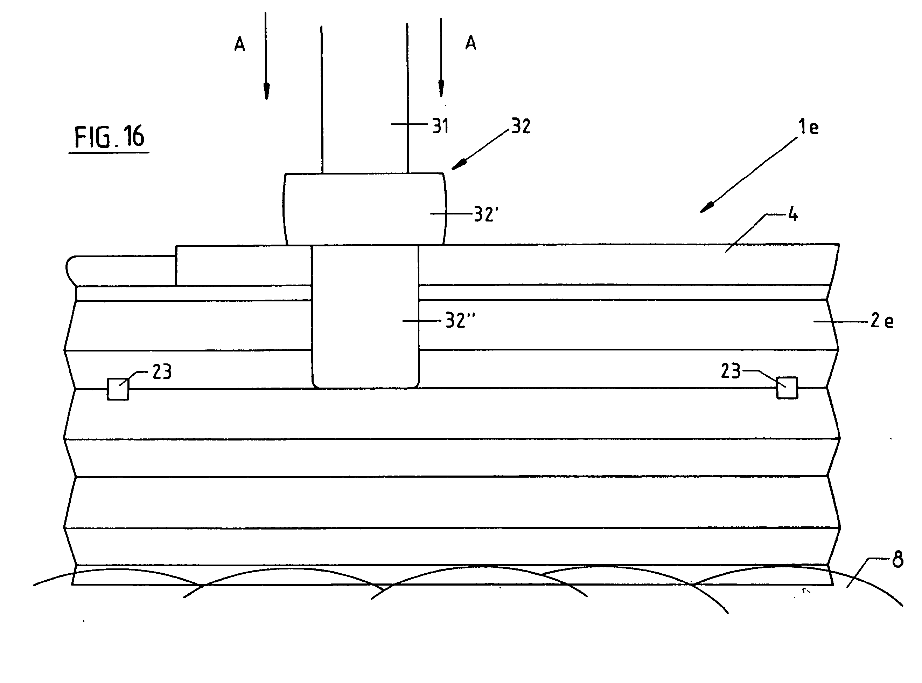

Zum Eintreiben des jeweiligen Begrenzungselementes, beispielsweise des Begrenzungselementes 1a dient entsprechend den Figuren 15 und 16 ein Einschlagstück oder eine Einschlaghilfe 29, die zum manuellen Einschlagen des Begrenzungselemente mittels eines Hammers 30 geeignet ist und im wesentlichen aus einem eine Führung beim Einschlagen bildenden, am Einschlagende spitz zulaufenden Führungsstab 31 und aus einem an diesem Stab axial nicht verschiebbar befestigten Winkel- oder Aufnahmestück 32 besteht. Das Aufnahmestück 32 bildet zwei Schenkel 32' und 32", von denen der Schenkel 32' mit dem Führungsstab 31 verbunden ist und von diesem Führungsstab radial wegsteht und von denen der Schenkel 32" im Abstand von dem Stab 31 und parallel zu diesem angeordnet ist, und zwar derart, daß sich der Schenkel 32" vom Schenkel 32' in Richtung des spitzen Endes des Stabes 31 wegerstreckt. Zwischen dem Führungsstab 31 und dem Schenkel 32' ist somit eine Aufnahme 33 für den oberen Rand 4 des jeweils einzuschlagenden Begrenzungselementes 1e oder eines anderen Begrenzungselementes gebildet. Das Einschlage erfolgt durch Schlagen auf das obere Ende des Führungsstabes 31, wobei zusammen mit dem Begrenzungselement 1e auch der Führungsstab 31 zunehmend in den Untergrund bzw. Boden 8 eindringt und für eine exakte Führung des Begrenzungselementes 1e beim Einschlagen sorgt bzw. ein seitliches Ausweichen des Führungselementes verhindert.

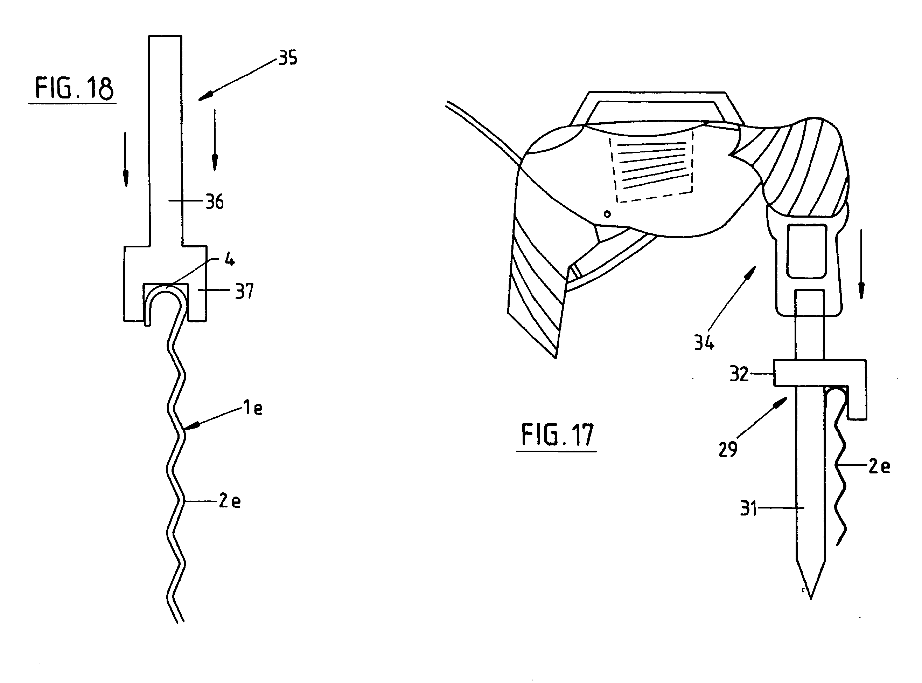

Die Figur 17 zeigt nochmals die Einschlaghilfe 29 zusammen mit dem einzubringenden Begrenzungselement 1e, allerdings bei einer Verwendung nicht mit einem Hammer 30, sondern mit einem maschinellen Einschlagwerkzeug 34.

Selbstverständlich sind auch andere Einschlaghilfen denkbar. Die Figur 18 zeigt eine Einschlaghilfe 35, die im wesentlichen aus einer leistenartigen, sich senkrecht zur Zeichenebene dieser Figur erstreckenden Platte 36 besteht, die an einer Längsseite mit einer Aufnahme 37 zur formschlüssigen Aufnahme des oberen Randes des einzuschlagenen Begrenzungselementes, beispielsweise des oberen Randes 4 des Begrenzungselementes 1e versehen ist. Die Einschlaghilfe 35 eignet sich insbesondere zum Einbringen von Begrenzungselementen bei einer geradlinig verlaufenden Rasenkantenbegrenzung.

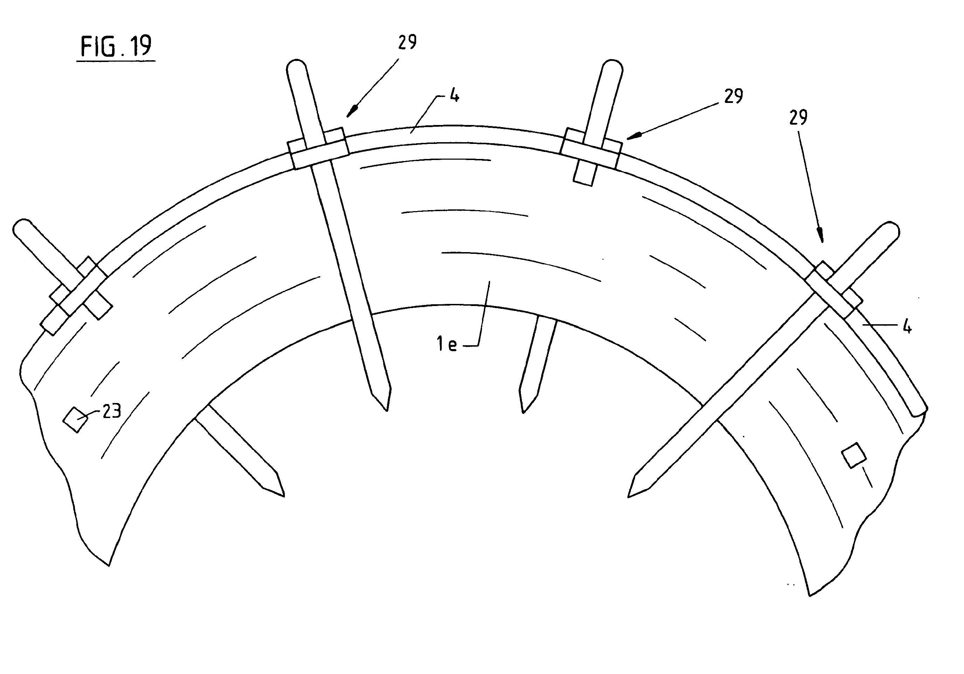

Die Figur 19 zeigt die Verwendung mehrerer Einschlaghilfen 29 bei einem gerundeten Begrenzungselement 1e. Die Einschlaghilfen 29 sind dabei teilweise mit ihrem Führungsstab 31 an der innenliegenden Seite und teilweise an der außenliegenden Seite der Krümmung bzw. Rundung vorgesehen.

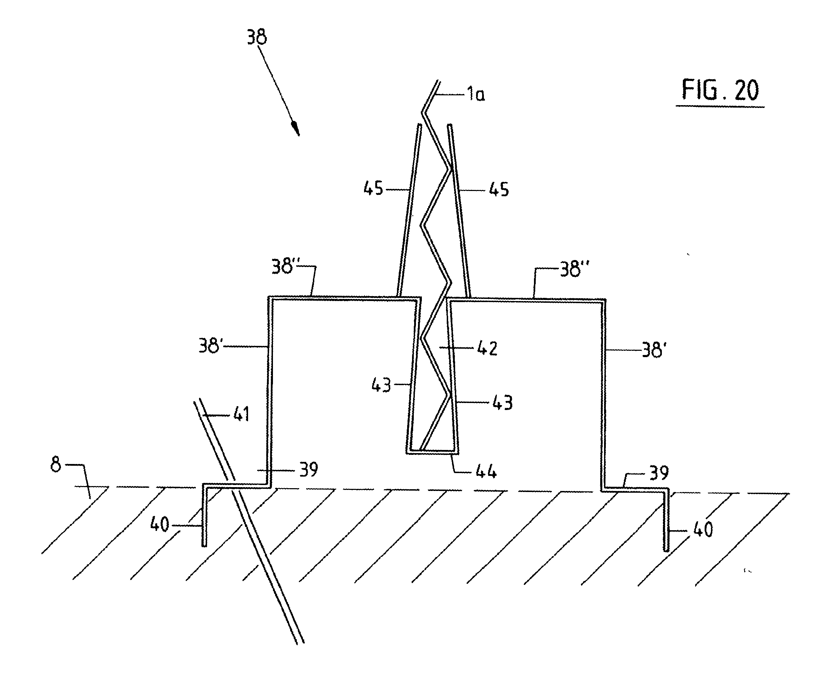

Die Figur 20 zeigt noch in vereinfachter Darstellung und im Längsschnitt eine Aufständerung bzw. Halterung 38, die aus einem Flachmaterial, beispielsweise aus korrosionsbeständigem Stahlblech durch Biegen und Stanzen hergestellt ist und zur aufrechten Anordnung eines Begrenzungselementes, beispielsweise des Begrenzungselementes 1a dort dient, wo diese Begrenzungselemente nicht in den Boden durch Einschlagen eingebracht wird, sondern mit diesem Begrenzungselement bzw. einer Vielzahl von aneinander anschließenden Begrenzungselementen eine Begrenzung gebildet wird, deren Bereich dann der Untergrund bis zu dem oberen Rand der Begrenzungselemente aufgefüllt wird. Die Halterung 38 verbleibt dann im Untergrund.

Im Detail ist das die Halterung 38 bildende Flachmaterial mehrfach abgewinkelt, und zwar zunächst so, daß die Halterung 38 generell ein U-Profil bildet mit den beiden äußeren Schenkeln 38' und einem diese Schenkel verbindenden Jochabschnitt 38". Die Schenkel 38' sind an ihrem dem jochabschnitt 38" entferntliegenden Ende jeweils mit einer eine Standfläche für die Halterung 38 bildenden Abwinklung 39 versehen, die über die Schenkel 38' seitlich nach außen wegsteht und in eine weitere Abwinklung 40 übergeht. Während die Abwinklung 39 in einer Ebene senkrecht oder quer zur Ebene der Schenkel 38 liegt, liegen die Abwinklungen 40 in Ebenen parallel oder nahezu parallel zu den Schenkel 38'. Bei Verwendung der Halterung 38 werden die Schenkel 40 in den Untergrund eingedrückt und fixieren somit die Halterung 38 im Untergrund. Selbstverständlich können auch noch weitere Fixierelemente, beispielsweise in den Untergrund eingeschlagene Anker 41 verwendet werden.

In der Mitte des Jochabschnittes 38" ist das Flachmaterial so abgewinkelt, daß dort ein zur Oberseite des Halters 38 hin offener Kanal 42 gebildet ist, der von zwei Abwinklungen 43 seitlich und von einem Boden 44 unten begrenzt ist. In dem Kanal 42 kann das jeweilige Begrenzungselement, beispielsweise das Begrenzungselement 1a mit seinem unteren Rand eingeführt werden, so daß es in diesem Kanal 42 gehalten und gegen Umkippen gesichert ist. Wie dargestellt, sind die Abwinklungen 43 so ausgeführt, daß sich der Kanal 42 zur oberen, offenen Seite hin in seiner Breite reduziert, so daß sich dort die Abwinklungen 42 aufgrund der Eigenelastizität des Flachmaterial federnd gegen das Begrenzungselement abstützen.

Zur zusätzlichen seitlichen Abstützung des Begrenzungselementes sind blattfederartige Abstützelemente 45 vorgesehen, die beidseitig gegen das Begrenzungselement 1a anliegen, und zwar oberhalb des Kanal 42. Die blattfederartige Abstützelemente 45 sind ebenfalls aus dem Flachmaterial der Halterung 38 gebildet.

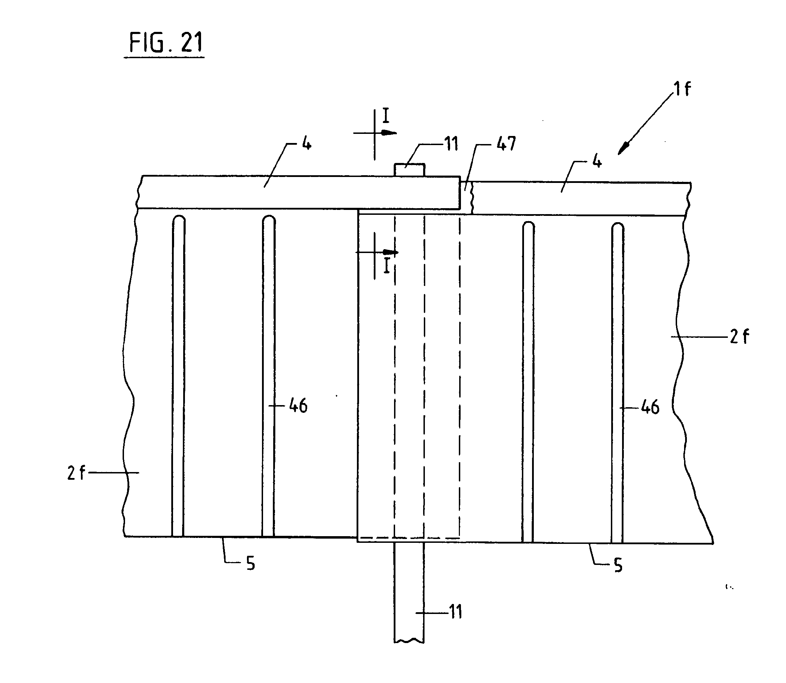

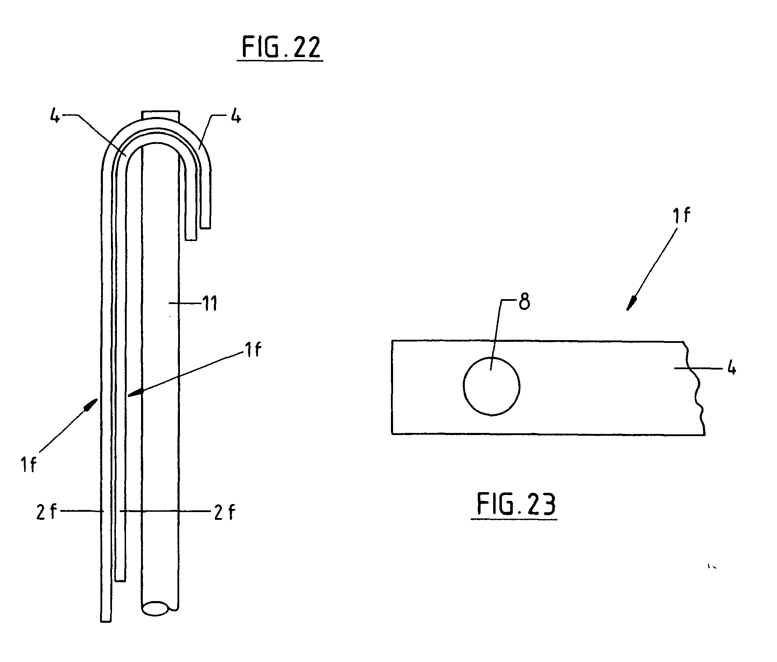

Die Figuren 21 - 23 zeigen als weitere mögliche Ausführungsform zwei aneinander anschließende Begrenzungselemente 1f, die wiederum jeweils von einer Platte 2f aus Chromstahl gebildet sind und zur Oberseite mit dem umgebogenen Rand 4 versehen sind.

In Eintreibrichtung, d.h. in der Achse senkrecht zu dem oberen Rand 4 sind die Platten 2f jeweils mit einer Vielzahl von die Platte verstärkenden Sicken 46 versehen, die als nutenartige Ausbauchungen in die jeweilige Platte 2f eingebracht sind und ausgehend von dem oberen Rand 4 bis an den unteren Längsrand 5 reichen.

Um mehrere Begrenzungselemente 1f einander überlappend anschließend zu können, ist der umgebogene Rand 4 an jeweils einem Ende jeder Platte 2f über einen Bereich 47 etwas aufgeweitet, so daß dort der Innenquerschnitt des U-förmig umgebogenen Randes 4 dem Außenquerschnitt entspricht, den der Rand 4 außerhalb des Bereiches 47 und insbesondere auch am anderen Ende der Platte 2f aufweist. Aneinander anschließende Begrenzungselemente 1e können dadurch an ihren umgebogenen Rändern 4 einander übergreifend eingebracht werden. Im Bereich 47 sowie auch am anderen Ende ist jede Platte 2e an dem umgebogenen Rand 4 mit einer der Öffnung 6 entsprechenden Öffnung 48 versehen. Bei aneinander anschließenden Begrenzungselementen 1f liegen die Öffnungen 48 der aneinander anschließenden Begrenzungselemente 1f deckungsgleich, so daß durch die Öffnungen 48 ein Stab11 zur zusätzlichen Verankerung und Verbindung der aneinander anschließenden Begrenzungselemente 1e in den Boden eingebracht werden kann.

Die Erfindung wurde voranstehend an Ausführungsbeispielen beschrieben. Es versteht sich, daß zahlreiche Abwandlungen oder Änderungen möglich sind. Den beschriebenen Ausführungen ist zunächst gemeinsam, daß die Begrenzungselemente 1a, 1b, 1c, 1d insbesondere auch bei bereits bestehenden Objekten (Garten-, Parkanlagen usw.) ohne Öffnen des Bodens 8 in diesen eingebracht werden. Um das Einbringen zu erleichtern sind die Begrenzungselemente 1a - 1f beispielsweise an ihrem beim Einbringen in den Boden 8 vorauseilenden unteren Rand 5 messerschneidenartig ausgeführt.

Vorstehend wurde davon ausgegangen, daß die Öffnungen 6 bzw. die Rohrstücke 14 zur Aufnahme und Halterung von Stäben für Zäune oder Begrenzungen dienen. Speziell bei starken Hanglagen können diese Stäbe 11 aber auch als zusätzliche Anker zur Aufnahme des Handdruckes bzw. zur Vermeidung eines Abrutschens verwendet werden.

Vorstehend wurde davon ausgegangen, daß die jeweilige Einschlaghilfe 29 nach dem Einschlagen des Begrenzungselementes wieder entfernt wird. Bei entsprechender Ausbildung der Einschlaghilfen können diese selbstverständlich auch als zusätzliche Abstützelemente für die Begrenzungselemente im Boden verbleiben.

### Bezugszeichenliste

- 1a, 1b, 1c, 1d, 1e, 1f: Begrenzungselement
- 2a, 2b, 2c, 2d. 2e, 2f: Platte
- 3: Profilierung bzw. Wellung
- 4: umgebogener Rand
- 4', 4": Schenkel
- 4"': Jochabschnitt
- 5: unterer Längsrand
- 6, 7: Öffnung
- 8: Boden bzw. Untergrund
- 9: Rasen
- 10: Verbindungselement
- 11: Stab
- 12: Anker
- 13: umgebogener Rand
- 13', 13": Schenkel
- 13"': Jochabschnitt
- 14: Rohrstück
- 15: Begrenzung
- 16: Verbindungselement
- 17: Ausnehmung
- 18: Verbindungselement
- 18': Schenkel
- 18": Jochabschnitt
- 19: Ausklinkung
- 20: Schraube
- 21: Schraubenkopf
- 22: Schaftabschnitt
- 23: Öffnung
- 24: Gewindeabschnitt
- 25: Mutter
- 26: Druckfeder
- 27: Lasche
- 28: Zwischenraum
- 29: Einschlagstück oder Einschlaghilfe
- 30: Hammer
- 31: Führungsstab
- 32: Aufnahmestück
- 32', 32": Schenkel
- 33: Aufnahme
- 34: Einschlagwerkzeug
- 35: Einschlaghilfe
- 36: Platte
- 37: Aufnahme
- 38: Aufständerung oder Halter
- 38': Schenkel
- 38": Jochabschnitt
- 39, 40: Abwinklung
- 41: Anker
- 42: Aufnahme oder Kanal
- 43: Abwinklung
- 44: Boden
- 45: Abstützelement
- 46: Sicke
- 47: Abschnitt
- 48: Öffnung

## Patentansprüche

1. Begrenzungselement für eine Rasenkantenbegrenzung in Form einer mit einem unteren ersten Plattenrand (5) voraus in einen Boden ohne Öffnen des Bodens eintreibbaren Platte (2a, 2e, 2f) aus einem Stahlblech mit einem durch Umbiegen des Bleches nur an einem dem ersten Plattenrand gegenüber liegenden zweiten Plattenrand erzeugten oberen Profilrand (4), der als zum ersten Plattenrand (5) hin offenes U-Profil geformt ist, **dadurch gekennzeichnet, dass** die Platte (2a, 2e, 2f) aus Chromstahl besteht,
und
dass die Platte (2a, 2e) parallel zu dem Profilrand (4) zwischen diesem und dem ersten Plattenrand (5) gewellt ist.

2. Begrenzungselement nach Anspruch 1, **dadurch gekennzeichnet, dass** der Profilrand (4) an einer Seite des Begrenzungselementes (1e, 1f) Teillänge (19, 47) ausgeklinkt ist.

3. Begrenzungselement nach Anspruch 1, **dadurch gekennzeichnet, dass** der Profilrand (4) an einer Seite des Begrenzungselementes über eine Teillänge aufgeweitet ist.

4. Begrenzungselement nach einem der vorhergehenden Ansprüche, **dadurch gekennzeichnet, dass** in dem Profilrand (4) und/oder in der Platte (2) Öffnungen (6, 7, 48) zum Durchführen von Stäben (11) und/oder Ankern (12) und/oder zum Durchführen von im Untergrund verlegten Leitungen vorgesehen sind.

5. Begrenzungselement nach einem der vorhergehenden Ansprüche, **dadurch gekennzeichnet, dass** zur Verbindung von aneinander anschließenden Begrenzungselementen in der Platte (2e) des Begrenzungselementes Öffnungen (23) vorgesehen sind.

6. Begrenzungselement nach einem der vorhergehenden Ansprüche, **dadurch gekennzeichnet, dass** es ringförmig gebogen ausgebildet ist.

7. Rasenkantenbegrenzung hergestellt unter Verwendung wenigstens eines Begrenzungselementes, vorzugsweise mehrerer aneinander anschließender Begrenzungselemente (1a, 1b, 1c, 1d, 1e, 1f) nach einem der Ansprüche 1 - 6.

8. Rasenkantenbegrenzung nach Anspruch 7, **dadurch gekennzeichnet, dass** der Profilrand (4) jedes Begrenzungselementes an einer Seite des Begrenzungselementes (1e, 1f) über eine Teillänge (19, 47) ausgeklinkt ist, dass die mit ihrer Wellung (3) ineinandergreifenden Begrenzungselemente (1 e) einander derart überlappen, dass die Profilränder (4) benachbarter Begrenzungselemente im Bereich der Ausklinkung aneinander anschließen.

9. Rasenkantenbegrenzung nach Anspruch 7 oder 8, **dadurch gekennzeichnet, dass** die mit ihrer Wellung (3) ineinandergreifenden Begrenzungselemente (1e) über eine federnde Schwenkverbindung miteinander verbunden sind, die ein Schwenken um eine Achse (24) bei gleichzeitigem axialen Auseinanderbewegen der Begrenzungselemente gegen eine Federwirkung ermöglicht.

10. Rasenkantenbegrenzung nach einem der Ansprüche 7 - 9, **gekennzeichnet durch** wenigstens einen Halter oder eine Aufständerung (38) für wenigstens ein Begrenzungselement (1a, 1b, 1c, 1 d, 1e, 1f).

11. Rasenkantenbegrenzung nach einem der Ansprüche 7 - 10, **gekennzeichnet durch** eine Einschlaghilfe (29, 35) zum Einbringen der Begrenzungselemente (1a, 1b, 1c, 1d, 1e, 1f),
wobei die Einschlaghilfe (29) beispielsweise einen Führungsstab (31) aufweist.

12. Rasenkantenbegrenzung nach einem der Ansprüche 7 - 11, **dadurch gekennzeichnet, dass** sich die Begrenzungselemente (1f) auch im Bereich des Profilrandes (4) überlappen.

## Claims

1. Border element for lawn edging in the form of a plate (2a ,2e, 2f) which is made of sheet steel and can be driven by a lower first plate edge (5) straight into the ground without first opening up the ground and which has an upper profiled edge (4) which is produced by bending round the sheet steel only along a second plate edge which is opposite the first plate edge and which is then formed as a U-shaped profile open towards the first plate edge (5),
**characterised in that** the plate (2a, 2e, 2f) is made from chromium-plated steel and that the plate (2a, 2e) is corrugated parallel to the profiled edge (4) between the latter and the first plate edge (5).

2. Border element according to claim 1 **characterised in that** the profiled edge (4) is notched along parts of the length (19, 47) along one side of the border element (1e, 1f).

3. Border element according to claim 1 **characterised in that** the profiled edge (4) is widened out over part of the length along one side of the border element.

4. Border element according to one of the preceding claims **characterised in that** openings (6, 7, 48) are provided in the profiled edge (4) and/or in the plate (2) for passing through rods (11) and/or anchors (12) and/or for passing through cables and pipes laid underground.

5. Border element according to one of the preceding claims **characterised in that** openings (23) are provided in the plate (2e) of the border element for connecting adjoining border elements.

6. Border element according to one of the preceding claims **characterised in that** it is bent into a ring-shape.

7. Lawn edging created by using at least one border element, preferably several adjoining border elements (1a, 1b, 1c, 1d, 1e, 1f) according to one of claims 1 to 6.

8. Lawn edging according to claim 7 **characterised in that** the profiled edge (4) of each border element is notched on one side of the border element (1e, 1f) over part of the length (19, 47), that the border elements (1e) which engage in one another through their corrugated formation (3) overlap one another so that the profiled edges (4) of adjacent border elements connect with one another in the notched area.

9. Lawn edging according to claim 7 or 8 **characterised in that** the border elements (1e) which engage in one another through their corrugated formation (3) are connected to one another through a resilient swivel connection which enables swivel movement about an axis (24) as the border elements move simultaneously axially apart against spring action.

10. Lawn edging according to one of claims 7 to 9 **characterised by** at least one holder or support stand (3 8) for at least one border element (1a, 1b, ,1c, 1d, 1e, 1f).

11. Lawn edging according to one of claims 7 to 10 **characterised by** a drive aid (29, 3 5) for banging in the border elements (1a, 1b, 1c, 1d, 1e, 1f) whereby the drive aid (29) can have a guide rod (31) by way of example.

12. Lawn edging according to one of claims 7 to 11 **characterised in that** the border elements (1f) also overlap in the area of the profiled edge (4).

## Revendications

1. Élément de limitation pour une bordure de pelouse sous la forme d'une plaque (2a, 2e, 2f) en tôle d'acier comprenant un premier bord inférieur (5) de plaque pouvant être enfoncé dans un sol sans ouvrir le sol et un bord profilé supérieur (4) qui est formé comme un profilé en U ouvert en direction du premier bord (5) de plaque et est produit par pliage de la tôle uniquement sur un deuxième bord de plaque se trouvant à l'opposé du premier bord de plaque, **caractérisé en ce que** la plaque (2a, 2e, 2f) est constituée d'acier au chrome et **en ce que** la plaque (2a, 2e) est ondulée parallèlement à ce bord profilé (4) entre celui-ci et le premier bord (5) de plaque.

2. Élément de limitation selon la revendication 1, **caractérisé en ce que** le bord profilé (4) est encoché d'un côté de l'élément de limitation (1e, 1f) sur une longueur partielle (19, 47).

3. Élément de limitation selon la revendication 1, **caractérisé en ce que** le bord profilé (4) est élargi d'un côté de l'élément de limitation sur une longueur partielle

4. Élément de limitation selon l'une des revendications précédentes, **caractérisé en ce que** dans le bord profilé (4) et / ou dans la plaque (2), des ouvertures (6, 7, 48) sont prévues pour faire passer des tiges (11) et/ou des ancres (12) et/ou pour faire passer des lignes placées dans le sous-sol.

5. Élément de limitation selon l'une des revendications précédentes, **caractérisé en ce que** pour relier des éléments de limitation adjacents les uns aux autres, des ouvertures (23) sont prévues dans la plaque (2e) de l'élément de limitation.

6. Élément de limitation selon l'une des revendications précédentes, **caractérisé en ce qu'**il est configuré en forme de courbe annulaire.

7. Bordure de pelouse produite en utilisant au moins un élément de limitation, de préférence plusieurs éléments de limitation (1a, 1b, 1c, 1d, 1e, 1f) selon un des revendications 1 - 6 adjacents les uns aux autres.

8. Bordure de pelouse selon la revendication 7, **caractérisée en ce que** le bord profilé (4) de chaque élément de limitation est encoché d'un côté de l'élément de limitation (1e, 1f) sur une longueur partielle (19, 47), **en ce que** les éléments de limitation (1e) s'engageant les uns dans les autres avec leur ondulation (3) se recouvrent les uns les autres de telle sorte que les bords profilés (4) d'éléments de limitation voisins se raccordent les uns aux autres dans la zone de l'encoche.

9. Bordure de pelouse selon la revendication 7 ou 8, **caractérisée en ce que** les éléments de limitation (1e) s'engageant les uns dans les autres avec leur ondulation (3) sont reliés les uns aux autres par un raccord pivotant faisant ressort qui permet un pivotement autour d'un axe (24) lors de l'écartement axial simultané des éléments de limitation contre une action de ressort.

10. Bordure de pelouse selon l'une des revendications 7 à 9, **caractérisée par** un appui ou un support (38) pour au moins un élément de limitation (1a, 1b, 1 c, 1d, 1e, 1f).

11. Bordure de pelouse selon l'une des revendications 7 à 10, **caractérisée par** un auxiliaire d'enfoncement (29, 35) pour introduire les éléments de limitation (1a, 1b, 1c, 1d, 1e, 1f), l'auxiliaire d'enfoncement (29) présentant par exemple une tige de guidage (31).

12. Bordure de pelouse selon l'une des revendications 7 à 11, **caractérisée en ce que** les éléments de limitation (1f) se recouvrent aussi dans la zone du bord profilé (4).
